(19) Europäisches Patentamt
European Patent Office
Office européen des brevets

(11) **EP 3 929 593 A1**

(12) **EUROPÄISCHE PATENTANMELDUNG**

(43) Veröffentlichungstag:
**29.12.2021  Patentblatt 2021/52**

(51) Int Cl.:
**G01P 3/50** (2006.01)        **G01P 3/66** (2006.01)
**G01P 3/68** (2006.01)

(21) Anmeldenummer: **21000159.0**

(22) Anmeldetag: **17.06.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.06.2020   DE 102020004099**

(71) Anmelder: **Podolski, Kevin**
**10247 Berlin (DE)**

(72) Erfinder: **Podolski, Kevin**
**10247 Berlin (DE)**

(54) **MESSSYSTEM UND MESSVERFAHREN ZUR BESTIMMUNG DER MEHRDIMENSIONALEN GESCHWINDIGKEIT VON FAHRZEUGEN**

(57)    Messsystem und Messverfahren zur gleichzeitigen, äußeren Messung und Bestimmung der Geschwindigkeit von Fahrzeugen, die sich in mehrere Raumrichtungen, also mehrdimensional, bewegen. Die Geschwindigkeitskomponenten werden unabhängig voneinander in mehreren, vorzugsweise orthogonal zueinander ausgerichteten Messrichtungen ermittelt und die tatsächliche Geschwindigkeit aus der vektoriellen Kombination der ermittelten Komponenten bestimmt. Dadurch kann die Geschwindigkeit eines Fahrzeugs auch beim Durchfahren einer Kurve oder bei einem Abbiegevorgang an einer Kreuzung ermittelt werden.

Fig. 1

**Beschreibung**

Technisches Gebiet

Die vorliegende Erfindung betriff das Verfahren zur Messung und Bestimmung der mehrdimensionalen Geschwindigkeit von Fahrzeugen und den hierfür verwendeten Messaufbau.

Stand der Technik

Geschwindigkeitsmesssysteme und Geschwindigkeitsmessverfahren messen, zum Beispiel, unter Anwendung der Lasertechnik oder von Lichtschranken, nach dem Prinzip der Weg-Zeit-Messung, die Zeit, die für das Passieren einer ebenen Referenzstrecke benötigt wird und errechnen auf dieser Basis die momentane Geschwindigkeit des Objektes. Beispiele dazu sind exemplarisch unter den Veröffentlichungsnummem DE102008019818A1, DE102005028264B4, DE000003913526A1, EP000000042546A1, EP000000397984A2 bekannt. Weitere Anwendungen messen mittels Radarstrahlen, nach dem Dopplerprinzip, die Frequenz von zuvor ausgesendeten und von dem Objekt reflektierten Signalen und bestimmen auf diese Weise die momentane Geschwindigkeit von Objekten. Ein Beispiel dazu ist exemplarisch unter der Veröffentlichungsnummer DE000001239128B bekannt. Darüber hinaus sind weitere, darauf basierende Verfahren bekannt, die Störungen der Messergebnisse detektieren und auf diese Weise falschen Messergebnissen vorbeugen. Ein Beispiel dazu ist exemplarisch unter der Veröffentlichungsnummer WO001994004930A1 bekannt.

Alle Anwendungen messen und bestimmen dabei die Geschwindigkeit von Messobjekten, die sich in eine Richtung, also eindimensional, bewegen. Im Falle der Lichtschrankentechnik, da die Berechnung der Geschwindigkeit auf dem Abstand zueinander paralleler Lichtschranken beruht. Im Falle der Lasertechnik, da die Bestimmung der Geschwindigkeit auf dem Weg beruht, der von dem Messobjekt, zwischen zwei Signalen, auf einer zu dem Messgerät ebenen Fahrlinie zurückgelegt wird. Und im Falle der Radarmessung, da die Bestimmung der Geschwindigkeit auf der Änderung von Frequenzen, in Abhängigkeit von der Entfernung des Messobjektes, beruht.

Abweichungen zwischen der Messachse des Messsystems und der tatsächlichen Fahrlinie des angemessenen Fahrzeugs, das in dieser Anmeldung alle Fortbewegungsmittel, unabhängig davon, ob sich diese mit eigener Kraft bewegen oder auf andere Weise fortbewegt werden, umfasst, sind im Zusammenhang mit den genannten Messverfahren, im Allgemeinen als Winkel- oder Cosinusfehler bekannt.

Darüber hinaus ist ein Messverfahren unter der Veröffentlichungsnummer JP 2013-174456A bekannt, das mittels Laser-Doppler-Messung die mehrdimensionalen Geschwindigkeitskomponenten eines Messobjektes in einem Messpunkt misst und unter Anwendung der Vektorrechnung die momentane Geschwindigkeit in diesem Messpunkt bestimmt.

Aufgabe

Geschwindigkeitsmesssysteme oder Geschwindigkeitsmessverfahren, die eine objektexterne, mehrdimensionale Messung der Geschwindigkeitskomponenten in einem variablen Messbereich und eine Bestimmung der momentanen Geschwindigkeit eines Fahrzeugs ermöglichen sind nicht bekannt.

Kerngedanke der Erfindung besteht darin, die Geschwindigkeitskomponenten des Fahrzeugs innerhalb des Messbereichs, in mehreren Raumrichtungen, gleichzeitig, vergleichbar einem Koordinatensystem, einzeln zu messen und eine momentane Geschwindigkeit des Messobjektes unter Anwendung der allgemeinen Gesetzmäßigkeiten der Vektorrechnung zu bestimmen.

In einer vereinfachten Variante erfolgt die Bestimmung einer Mindestgeschwindigkeit des angemessenen Fahrzeugs unter Verwendung eines Lichtschranken- oder Lasermesssystems, nach dem Prinzip der Weg-Zeit-Messung und unter Berücksichtigung der Gesetzmäßigkeiten der Vektorrechnung, in Verbindung mit allgemeinen Erkenntnissen einer mathematischen Analyse.

Darstellung der Erfindung

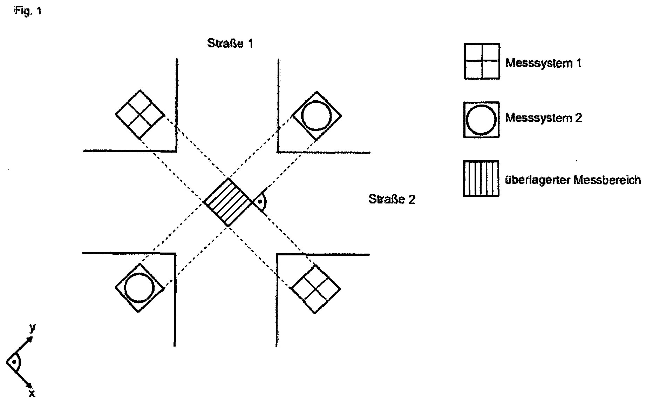

Diese Aufgabe wird erfindungsgemäß dadurch gelöst, dass bekannte Messsysteme, also zum Beispiel Laser-, Lichtschranken- oder Radarsysteme, mehrfach und/oder in Kombination, gleichzeitig zur Messung von jeweils einer im rechten Winkel zueinander verlaufenden Messrichtung, die sich in einem mehrdimensionalen Messbereich überlagern, betrieben werden und die Geschwindigkeitskomponenten des angemessenen Fahrzeugs in der jeweiligen Raumrichtung, in diesem Messbereich messen. Siehe hierzu Fig. 1.

Die gemessenen Geschwindigkeitskomponenten werden anschließend zu einem, abhängig von der Anzahl der gemessenen Raumrichtungen, mehrdimensionalen Geschwindigkeitsvektor $\vec{v} = (x : y; z ; ...)$ zusammengefasst.

Ein zweidimensionaler Geschwindigkeitsvektor $\vec{v}\,(x,y) = (x;y)$ enthält dabei, analog einem Koordinatensystem, zum Beispiel die Geschwindigkeiten in x- und in y-Richtung, die durch Mehrfachanwendung einer Messtechnik oder Kombination zweier Messtechniken, in dem zweidimensionalen Messbereich, gleichzeitig gemessen wurden.

Die momentane Geschwindigkeit des Fahrzeugs wird durch den Betrag des mehrdimensionalen Geschwindigkeitsvektors, mittels der Gleichung $|\vec{v}| = \sqrt{x^2 + y^2 + z^2 + \cdots} = v,$ bestimmt.

Die momentane Geschwindigkeit, auf Basis eines zweidimensionalen Geschwindigkeitsvektors $\vec{v}\,(x,y) = (x\,;$ y), würde durch die Gleichung $|\vec{v}| = \sqrt{x^2 + y^2} = v,$ bestimmt.

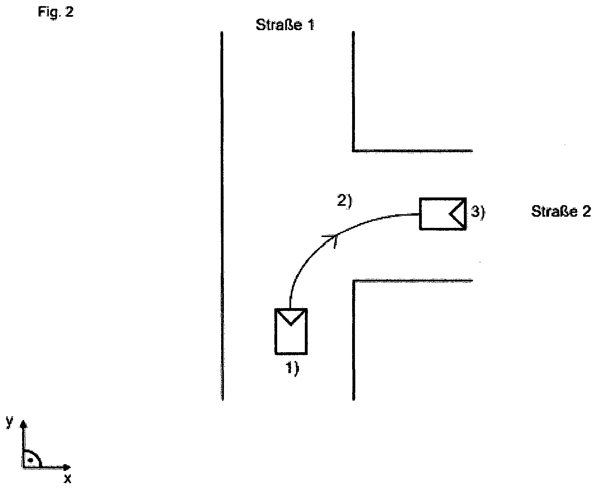

Durch die Bestimmung einer momentanen Geschwindigkeit, zum Beispiel auf Basis eines zweidimensionalen Geschwindigkeitsvektors lassen sich nunmehr Geschwindigkeiten eines Fahrzeugs innerhalb eines variablen Messbereichs messen, die gleichzeitig in mehrere Raumrichtung wirken, zum Beispiel beim Durchfahren einer, annähernd horizontal zu der Messachse der verwendeten Messysteme verlaufenden, Fahrbahnkurve. Siehe hierzu Fig. 2.

Die Fig. 2 zeigt beispielhaft mehrdimensionale Geschwindigkeitszustände eines Fahrzeugs beim Durchfahren einer Kurve. In Bezug auf die Geschwindigkeitskomponenten sind dabei im Wesentlichen 3 aufeinanderfolgende Zustandsphasen zu unterscheiden. Für diese Zustandsphasen gilt:

1) $\vec{v}\,(x, y) = (0;\,y)$ = reine Längsbeschleunigung in y-Richtung

2) $\vec{v}\,(x, y) = (x;y)$ = Längsbeschleunigung in y-, Querbeschleunigung in x-Richtung

3) $\vec{v}\,(x, y) = (x;\,0)$ = reine Längsbeschleunigung in x-Richtung

Diese Aufgabe wird in einer vereinfachten Variante erfindungsgemäß dadurch gelöst, dass eine eindimensionale Messung einer Geschwindigkeitskomponente mittels eines parallel zur Fahrbahn ausgerichtetem Lichtschrankenoder Lasermesssystems zur Messung einer an sich mehrdimensionalen Bewegung verwendet und die Mindestgeschwindigkeit des Fahrzeugs bestimmt wird.

Die momentane Geschwindigkeit wird in der vereinfachten Variante analog [0012] bestimmt. Bei Messung einer geringeren Anzahl, also weniger als zur vollständigen Erfassung aller Dimensionen der mehrdimensionalen Bewegung erforderlich, werden nicht gemessenen Geschwindigkeitskomponenten, mithin die somit nicht erfassten Raumrichtungen, mit dem Wert Null belegt und bei der Bestimmung der momentanen Geschwindigkeit berücksichtigt. Die vereinfachte Variante ermöglicht so die Abschätzung einer momentanen Mindestgeschwindigkeit einer mehrdimensionalen Bewegung.

Die vereinfachte Variante zur Bestimmung der momentanen Mindestgeschwindigkeit, einer an sich zweidimensionalen Bewegung des Fahrzeugs, wird nunmehr durch Messung in nur einer Raumrichtung, also einer eindimensionalen Messung ermöglicht und der Term für die nicht gemessene Geschwindigkeitskomponente, mithin der nicht erfassten Raumrichtung, mit 0 abgeschätzt. Dies wäre, zum Beispiel im Zusammenhang mit der Überwachung einer Höchstgeschwindigkeit beim Durchfahren einer Kurve durch ein Fahrzeug denkbar, da die Berücksichtigung der bisher nicht erfassten Geschwindigkeitskomponente der weiteren Raumrichtung, das Messergebnis, die momentane Geschwindigkeit, nach dem Zusammenhang $|\vec{v}| = \sqrt{x^2 + y^2} = v,$ in jedem Fall erhöhen würde.

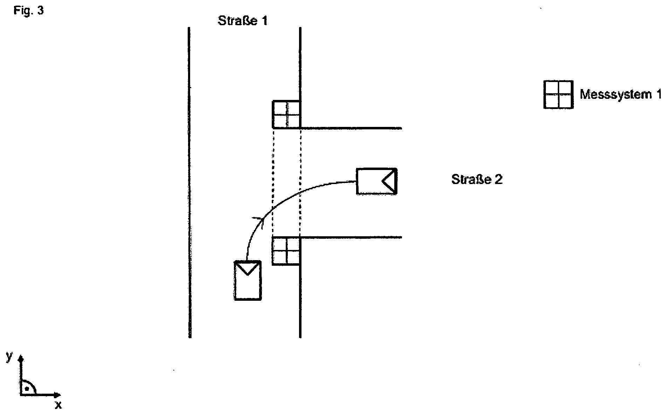

Die momentane Geschwindigkeit einer zweidimensionalen Bewegung eines Fahrzeugs würde auf Basis des vereinfachten Verfahrens mit eindimensionaler Messung in x-Richtung, durch den zweidimensionalen Geschwindigkeitsvektor $\bar{v}\,(x,y) = (x;0)$, mit y = 0, mithin durch die Gleichung $|\vec{v}| = \sqrt{x^2 + y^2} = \sqrt{x^2 + 0^2} = v,$ bestimmt. Siehe hierzu Fig. 3.

Die Fig. 3 zeigt beispielhaft einen zweidimensionalen Geschwindigkeitszustand eines Fahrzeugs beim Durchfahren einer Kurve, dessen Mindestgeschwindigkeit durch Messung in einer Dimension bestimmt wird. Für diese Zustandsphase gilt: $\bar{v}\,(x, y) = (x;0)$ = keine Messung der y-Komponente.

Im Vergleich zum bisherigen Stand der Technik kann eine Messung in der vereinfachten Variante bei paralleler Ausrichtung eines Lichtschrankenmesssystems oder eines anderen Messsystems, das auf dem Prinzip der Weg-Zeit-Messung beruht, zur Fahrbahn, ohne weitere Berücksichtigung einer Abweichung zwischen Messachse und Fahrlinie des Fahrzeugs, mithin ohne Beachtung eines potenziellen Winkel- oder Cosinusfehlers, auch im Bereich einer Fahrbahnkurve erfolgen.

Im Vergleich zum bisherigen Stand der Technik in Bezug auf das unter der Veröffentlichungsnummer JP 2013-174456A bekannte Laser-Doppler-Messsystem kann die Messung mit variablem Messbereich auch bei einem im Voraus nicht präzise zu definierendem Messpunkt erfolgen. Der Messbereich kann erfindungsgemäß durch Anpassung der Messtrecke in der jeweiligen Raumrichtung, individuell an den Messort angepasst werden. Hier wäre eine Anwendung bei einer Geschwindigkeitsmessung innerhalb einer Fahrbahnkurve vorstellbar, die durch unterschiedliche Fahrzeuge mit unterschiedlicher Fahrlinie durchfahren wird, denkbar.

Ein Praxistest wurde mittels zweier Lichtschrankenmesssysteme analog RS 06/81 mit Stoppuhr LED 10/92 E der Firma wk-Ingenieurbüro für Zeitmessung, unter Verwendung der Reflektionslichtschrankensensoren Panasonic CY-192B-P-Y, mit zur Fahrbahn paralleler Ausrichtung und festem Abstand von jeweils einem Meter zwischen Start und Stopp, unter Annahme einer konstanten Fahrzeuggeschwindigkeit innerhalb dieser Messstrecke, ausgeführt. Die Sensoren verfügen nach dem Datenblatt des Herstellers über eine maximale Ansprechzeit von einer Millisekunde. Die Auflösung der LED-Stoppuhr, nach Bezeichnung des Herstellers ELV LSU 100, beträgt ebenfalls eine Millisekunde. Die Anlage war vor der Messung nicht amtlich geeicht worden.

Nach einem Funktionstest, in dem beide Anlagen zunächst einzeln, hintereinander betrieben wurden, wurden beide Anlagen, unter Anwendung von Erkenntnissen trigonometrischer Zusammenhänge, orthogonal zueinander ausgerichtet und ein Aufbau gemäß Fig. 1 errichtet.

Der so errichtete zweidimensionale Messbereich, mit einer Messstrecke von jeweils einem Meter wurde unter Verwendung eines serienmäßig ausgestatteten Personenkraftwagens mit zugelassener Rad-Reifen-Kombination in einer 180 Grad, kurvenförmig verlaufenden Fahrlinie mit unterschiedlichen Geschwindigkeiten durchfahren. Der Tachometer des Fahrzeugs war vor der Messung nicht amtlich geeicht worden. Die Aktivierung des Tempomaten war ab einer Geschwindigkeit von mindestens 25 km/h möglich.

Mit dem beschriebenen Messaufbau wurde nachfolgende Messreihe zweier, zueinander orthogonaler Raumrichtungen, parallel zur Fahrbahn, gleichzeitig gemessen und eine resultierenden Kurvengeschwindigkeit, die momentane Geschwindigkeit, vektoriell bestimmt.

| Geschwindigkeit gemäß Tachometer | 7,5 km/h (Standgas) | 10 km/h | 15 km/h | 25 km/h (Tempomat) |
|---|---|---|---|---|
| Mindestgeschwindigkeit gemäß EU75/443/EWG und § 57 StVZO | 2,75 km/h | 5 km/h | 9,5 km/h | 18,5 km/h |
| Zeitmessung Richtung 1 | 0,738 s | 0,583 s | 0,407 s | 0,216 s |
| Zeitmessung Richtung 2 | 0,721 s | 0,540 s | 0,415 s | 0,247 s |
| **Resultierende Kurvengeschwindigkeit** | **6,98 km/h** | **9,09 km/h** | **12,39 km/h** | **22,14 km/h** |

**Patentansprüche**

1. Verfahren zur Bestimmung der Geschwindigkeit eines sich bewegenden Fahrzeugs, nämlich zur Bestimmung seiner Geschwindigkeit im Raum durch objektexterne Messung, **dadurch gekennzeichnet, dass** die Bestimmung der Geschwindigkeit des Fahrzeugs in einem vereinfachten Verfahren mittels eindimensionaler Geschwindigkeitsmessung durch ein parallel zur Fahrbahn ausgerichtetes Lichtschrankenmesssystem, anderenfalls mittels mehrdimensionaler Geschwindigkeitsmessung erfolgt, indem durch mehrere objektexterne Messsysteme die Geschwindigkeit einzeln in mehreren, sich in einem Messbereich überlagernden Raumrichtungen, gleichzeitig gemessen wird und die Geschwindigkeit des Fahrzeugs in dem Messbereich als Betrag einer vektoriellen Überlagerung der gemessenen Geschwindigkeiten bestimmt wird.

2. Verfahren nach Anspruch 1, **dadurch gekennzeichnet, dass** bei dessen Ausführung die Geschwindigkeit eines Fahrzeugs beim Durchfahren einer Fahrbahnkurve bestimmt wird.

3. Verfahren nach Anspruch 1 oder 2, **dadurch gekennzeichnet, dass** bei dessen Ausführung in einem vereinfachten Verfahren, die Mindestgeschwindigkeit eines Fahrzeugs beim Durchfahren einer Fahrbahnkurve, mithilfe eines zur Fahrbahn parallel ausgerichteten Lichtschrankenmesssystems bestimmt wird.

4. Verfahren nach Anspruch 1 oder 2, **dadurch gekennzeichnet, dass** mittels des Verfahrens die Höchstgeschwindigkeit beim Durchfahren der Fahrbahnkurve überwacht wird.

5. Messsystem zur objektexternen Messung der Geschwindigkeit eines sich bewegenden Fahrzeugs, **dadurch gekennzeichnet, dass** das Messsystem zur Messung der Geschwindigkeit des Fahrzeugs in mehreren, sich in einem Messbereich überlagernden Raumrichtungen ausgebildet ist, wozu es mehrere, die Geschwindigkeit in dem Messbereich gleichzeitig, einzeln in jeweils einer, der zueinander im rechten Winkel verlaufenden Raumrichtungen messende Systeme aufweist, deren Messergebnisse vektoriell überlagert werden.

6. Messsystem nach Anspruch 5, **dadurch gekennzeichnet, dass** es sich bei dessen zur Messung der Geschwindigkeit in jeweils einer einzelnen Raumrichtung vorgesehenen Systemen, nach dem Prinzip der Weg-Zeit-Messung, insbesondere um

   - Lasermesssysteme oder
   - Lichtschrankenmesssysteme oder
   - Radarmesssysteme

handelt, welche in dem Messsystem gleichzeitig einfach, mehrfach und/oder in Kombination betrieben werden.

7. Messsystem nach Anspruch 5 oder 6, **dadurch gekennzeichnet, dass** dessen mehrere, die Geschwindigkeit in dem Messbereich einzeln in jeweils einer, der zueinander im rechten Winkel verlaufenden Raumrichtungen messende Systeme zur objektextemen Messung der Geschwindigkeit eines Fahrzeugs beim Durchfahren einer Fahrbahnkurve angeordnet sind.

Fig. 1

Straße 1

Straße 2

Messsystem 1

Messsystem 2

überlagerter Messbereich

y

x

Fig. 2

Straße 1

Straße 2

Fig. 3

Straße 1

Messsystem 1

Straße 2

y

x

Europäisches
Patentamt

European
Patent Office

Office européen
des brevets

# EUROPÄISCHER RECHERCHENBERICHT

Nummer der Anmeldung

EP 21 00 0159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 118150 A1 (SMS SMART MICROWAVE SENSORS GMBH [DE]) 30. Januar 2020 (2020-01-30) | 1-7 | INV. G01P3/50 G01P3/66 G01P3/68 |
| Y | * Absätze [0001], [0007] - [0014], [0025], [0028], [0039], [0040]; Abbildungen 1,2 * | 5-7 | |
| | ----- | | |
| X | US 2017/067991 A1 (LIU WEIJIE [JP] ET AL) 9. März 2017 (2017-03-09) | 1,2,4 | |
| Y | * Absätze [0002], [0031] - [0046], [0072] - [0076], [0092] - [0101]; Abbildungen 1,8 * | 5-7 | |
| | ----- | | |

**RECHERCHIERTE SACHGEBIETE (IPC)**

G01P

Der vorliegende Recherchenbericht wurde für alle Patentansprüche erstellt

| Recherchenort | Abschlußdatum der Recherche | Prüfer |
|---|---|---|
| München | 26. Oktober 2021 | Felicetti, Christoph |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**EP 3 929 593 A1**

**ANHANG ZUM EUROPÄISCHEN RECHERCHENBERICHT
ÜBER DIE EUROPÄISCHE PATENTANMELDUNG NR.**

EP 21 00 0159

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-10-2021

| Im Recherchenbericht angeführtes Patentdokument | Datum der Veröffentlichung | Mitglied(er) der Patentfamilie | Datum der Veröffentlichung |
|---|---|---|---|
| DE 102018118150 A1 | 30-01-2020 | CA 3107155 A1<br>CN 112513952 A<br>DE 102018118150 A1<br>EP 3827423 A1<br>KR 20210031975 A<br>US 2021286072 A1<br>WO 2020020655 A1 | 30-01-2020<br>16-03-2021<br>30-01-2020<br>02-06-2021<br>23-03-2021<br>16-09-2021<br>30-01-2020 |
| US 2017067991 A1 | 09-03-2017 | CN 106019281 A<br>JP 6770299 B2<br>JP 2016183953 A<br>US 2017067991 A1 | 12-10-2016<br>14-10-2020<br>20-10-2016<br>09-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008019818 A1
- DE 102005028264 B4
- DE 000003913526 A1
- EP 000000042546 A1
- EP 000000397984 A2
- DE 000001239128 B
- WO 001994004930 A1
- JP 2013174456 A